# EUROPÄISCHE PATENTANMELDUNG

(11) **EP 2 442 255 A1**
(43) Veröffentlichungstag der Anmeldung: **18.04.2012**
(21) Anmeldenummer: 10180349.2
(22) Anmeldetag: 27.09.2010
(51) Int. Cl.: G06K 7/10

(54) **RFID-Lesevorrichtung**

(71) Anmelder: Sick AG, 79183 Waldkirch (DE)
(72) Erfinder: Fislage, Michael, 74211 Leingarten (DE)
(74) Vertreter: Hehl, Ulrich

(57) **Zusammenfassung**

Es wird eine RFID-Lesevorrichtung (10) zum Auslesen eines RFID-Transponders (36) mit einer Antenne (16) zum Abstrahlen und/oder Empfangen eines RFID-Signals und mit einer Sende-/Empfangseinheit (18) angegeben, die mit der Antenne (16) verbunden ist, um das RFID-Signal unter Verwendung von Antennenparametern zu senden und/oder zu empfangen. Dabei weist die Antenne (16) einen Datenträger (26) auf, in dem die Antennenparameter abgelegt sind, und die Sende-/Empfangseinheit (18) ist dafür ausgebildet, auf den Datenträger (26) zuzugreifen, um die Antennenparameter abzufragen.

## Beschreibung

Die Erfindung betrifft eine RFID-Lesevorrichtung und ein Verfahren zum Auslesen eines RFID-Transponders nach dem Oberbegriff von Anspruch 1 beziehungsweise 10.

RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

RFID-Transponder können prinzipiell aktiv sein, also eine eigene Energieversorgung aufweisen und selbstständig elektromagnetische Strahlung erzeugen. In der Praxis eignen sich diese Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In dem etablierten Ultrahochfrequenzstandard ISO 18000-6 werden passive Transponder nach dem Backscatter-Verfahren ausgelesen.

RFID-Geräte verwenden interne oder externe Antennen. Beim Einsatz muss sichergestellt werden, dass das Gerät die zulässigen nationalen Grenzwerte erfüllt. Da Antennen verschiedener Hersteller angeschlossen werden, sind jeweils gemäß Datenblatt die Kennwerte im RFID-Gerät einzustellen. Zusätzlich muss auch die Antennenkabeldämpfung des Anschlusskabels der externen Antenne parametriert werden.

Die Überprüfung der korrekten Parametrierung erschöpft sich gemäß Stand der Technik darin, bei der Inbetriebnahme darauf zu achten, dass die Parameter der Antenne richtig eingestellt werden. Der Bediener hat beispielsweise selber sicherzustellen, dass die maximalen Sendeleistungen nicht überschritten werden können. Dies setzt teilweise ein tiefes Grundverständnis voraus. Fehleingaben und sogar absichtliche Manipulationen führen im schlimmsten Fall dazu, dass die Geräte außerhalb der gültigen Grenzwerte arbeiten.

Die herkömmliche Installation einer externen Antenne erfordert somit Fachpersonal und lässt Raum für Manipulationen. Deshalb können Fehlparametrierungen mit den entsprechenden Haftungsfolgen bei Verletzung der Grenzwerte auftreten. Ein einfaches und kostengünstiges "Plug & Play" ist nicht möglich.

Aus der DE 103 53 613 A1 ist eine Vorrichtung zum Einstellen und zur Steuerung einer RFID-Antenne bekannt. Dabei wird die Antennencharakteristik ausgemessen, und anschließend findet ein Antennenabgleich statt. Durch das Ausmessen der Antennencharakteristik ist dieses Vorgehen recht aufwändig. Zudem wird dadurch auch nur ein kleiner Teil der relevanten Antennenparameter erfasst.

Es ist daher Aufgabe der Erfindung, den Anschluss verschiedener Antennen an einen RFID-Leser zu vereinfachen.

Diese Aufgabe wird durch eine RFID-Lesevorrichtung gemäß Anspruch 1 und ein Verfahren zum Auslesen eines RFID-Transponders gemäß Anspruch 10 gelöst. Dabei geht die Erfindung von dem Grundgedanken aus, die notwendigen Antennenparameter direkt von der angeschlossenen Antenne zu erfahren. Zu diesem Zweck ist in der Antenne ein Datenträger vorgesehen, auf dem die Antennenparameter abgelegt sind. Dabei sind Antennenparameter in einem weiten Sinn zu verstehen, da es auch genügt, wenn der Datenträger nur so viel Information hierzu verfügbar macht, dass die eigentlichen Antennenparameter daraus leicht abgeleitet werden können, etwa durch Zugriff auf eine Tabelle oder eine Datenbank.

Die Erfindung hat den Vorteil, dass die Installation eines RFID-Lesers erheblich vereinfacht wird. Es sind keinerlei Kenntnisse des Bedienpersonals über die Antennen erforderlich. Die Antennenparameter werden automatisch richtig gewählt, und der RFID-Leser kann damit ausschließlich innerhalb der gültigen Normen betrieben werden.

Von Normen gesetzte Grenzwerte betreffen jeweils die Abstrahlung, nicht den Empfang von elektromagnetischen Signalen. Gleichwohl können die Antennenparameter des Datenträgers auch für den Empfang verwendet werden. Ein RFID-Leser nach dem Backscatter-Verfahren strahlt im Übrigen nicht nur RFID-Signale ab, also modulierten Signale, die der Kommunikation mit RFID-Transpondern dienen, sondern auch ein Trägersignal zu deren Energieversorgung. Auch für dieses Trägersignal werden Antenne und Antennenparameter genutzt.

Vorteilhafterweise ist eine mit der Sende-/Empfangseinheit verbundene Auswertungseinheit zum Auslesen und/oder Eincodieren von RFID-Informationen vorgesehen. Damit werden den RFID-Signalen die eigentlich interessierenden RFID-Informationen entnommen oder aufgeprägt.

Die Sende-/Empfangseinheit ist bevorzugt dafür ausgebildet, die Antennenparameter automatisch beim Verbinden mit der Antenne abzufragen. So erfolgt die Einstellung der korrekten Antennenparameter direkt beim Einstecken der Antenne beziehungsweise des Antennenkabels. Möglich ist auch, die Antennenparameter wiederholt während des Betriebs abzufragen, beispielsweise in regelmäßigen Zyklen. Denkbar ist auch, die Antennenparameter auf eine Anforderung der Bedienperson oder eines übergeordneten Systems abzufragen, in das der RFID-Leser integriert ist. In der Regel werden die Antennenparameter aus dem Datenträger ausgelesen und, gegebenenfalls nach Umrechnungen oder Anpassungen, in einen eigenen Speicher des RFID-Lesers übertragen. Alternativ ist auch denkbar, dass der RFID-Leser unmittelbar auf den Datenträger als Speicher zugreift.

Vorzugsweise ist in dem Datenträger lediglich eine Identifikationsinformation der Antenne abgelegt, wobei die Sende-/Empfangseinheit die Antennenparameter anhand der Identifikationsinformation bestimmt. Die Antennenparameter selbst sind dabei beispielsweise in einer Tabelle des RFID-Lesers oder eines übergeordneten Systems hinterlegt. Damit kann der Speicherbedarf der Antenne sehr klein gehalten werden, und die Flexibilität, die für den RFID-Leser erforderlichen Antennenparameter anzupassen und zu optimieren, ist wesentlich größer.

Die Antenne ist bevorzugt eine externe Antenne. Sie ist also nicht interner Bestandteil des RFID-Lesers, nicht in dessen Gehäuse integriert oder daran befestigt. Bei einer externen Antenne ist der Austausch von vorneherein beabsichtigt, so dass die erfindungsgemäße eindeutige Zuordnung der Antennenparameter besonders vorteilhaft ist.

Die Antenne ist dabei bevorzugt über ein Antennenkabel mit der RFID-Lesevorrichtung verbunden. Das Antennenkabel ist besonders bevorzugt eines aus einer Vielzahl von zum Anschluss der Antenne verwendbaren Antennenkabeln unterschiedlicher Länge, aber gleichen Dämpfungsverhaltens. Es gibt demnach einen für den RFID-Leser vorgesehenen Kabelsatz mit genormten Antennenkabeln. Die Bedienperson muss nicht mehr darauf achten, ein Antennenkabel mit geeignetem Dämpfungsverhalten zu verwenden und auch nicht das Dämpfungsverhalten parametrieren. Alternativ ist ein unterschiedliches Dämpfungsverhalten der Antennenkabel zugelassen, und das Dämpfungsverhalten ist einer der in dem Datenträger gespeicherten Antennenparameter. In diesem Fall sollte das Antennenkabel nicht von der Antenne lösbar sein oder zumindest eine Anschlusscodierung vorgesehen sein, so dass stets nur ein Antennenkabel an die Antenne angeschlossen ist, welches auch das gespeicherte Dämpfungsverhalten besitzt.

Der Datenträger ist bevorzugt ein RFID-Transponder. Dieser kann anfänglich mit generischen Antennenparametern ausgelesen werden, womit dann sofort die passenden Antennenparameter verfügbar sind. Im späteren Betrieb wird dann ein Filter verwendet, beispielsweise in der Auswertungssoftware, um diesen RFID-Transponder nicht weiter zu beachten. Alternativ zu einem RFID-Transponder sind aber auch jegliche sonst bekannten Speichermedien denkbar.

Als Antennenparameter kommen eine ganze Reihe von Parametern in Frage, wobei in jedem Anwendungsfall nicht notwendig alle, sondern auch nur Parameter oder eine Auswahl der Parameter in dem Datenspeicher abgelegt sind, beziehungsweise es werden nicht alle in dem Datenspeicher abgelegten Antennenparameter abgefragt. Einige mögliche Antennenparameter sind: Polarisation, Strahlungswiderstand, Impedanz, Wirkungsgrad, Richtfaktor, Antennengewinn (Gain), Absorptions- oder Wirkfläche, Bandbreite. Anstelle der Antennenparameter selbst können auch aufbereitete Parameter gespeichert sein, also Größen, die in dem RFID-Leser verwendet werden sollten, wenn dieser mit der entsprechenden Antenne zusammenarbeitet. Alternativ ermittelt der RFID-Leser solche Größen anhand der Antennenparameter selbst.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines erfindungsgemäßen RFID-Lesers und
- Fig. 2: eine dreidimensionale Darstellung der Montage des RFID-Lesers gemäß Figur 1 an einem Förderband.

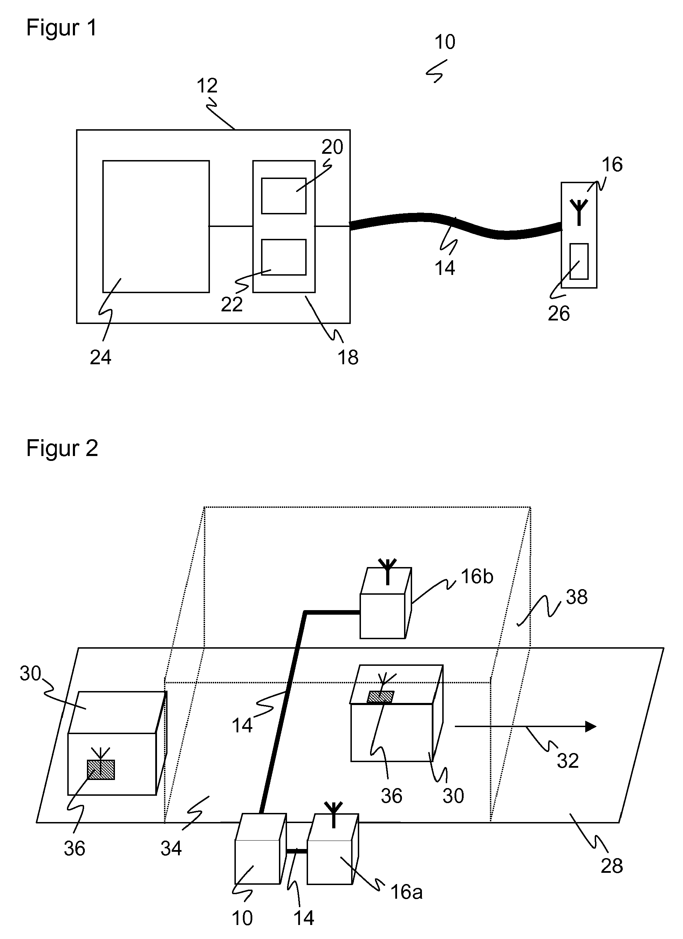

Figur 1 zeigt einen erfindungsgemäßen RFID-Leser 10 in einer Blockdarstellung. Meist kann ein RFID-Leser 10 auch Schreiboperationen auf einem RFID-Transponder ausführen, denn um die Kommunikationsverbindung mit dem RFID-Transponder herzustellen, wird ohnehin in den üblichen Protokollen ein beidseitiger Informationsaustausch vorausgesetzt.

In einem Gehäuse 12 befindet sich die Auswertungs- und Ansteuerungselektronik. Über ein Antennenkabel 14 ist eine Antenne 16 angeschlossen. Eine Sende-/Empfangseinheit 18 umfasst einen Sender 20 und einen Empfänger 22, um von der Antenne 16 RFID-Signale zu empfangen oder über die Antenne 16 RFID-Signale abzustrahlen.

Eine Steuer- und Auswerteeinheit 24 ist mit der Sende-/Empfangseinheit 18 verbunden. Sie erhält von dem Empfänger 22 ein den empfangenen RFID-Signalen entsprechendes elektronisches Signal beziehungsweise veranlasst über den Sender 20, ein RIFD-Signal abzustrahlen. Die Auswertungseinheit 24 kennt die zu verwendenden RFID-Protokolle, um Information in ein RFID-Signal zu codieren oder es aus einem RFID-Signal auszulesen. RFID-Kommunikation als solche ist bekannt. Deshalb werden die erforderlichen Komponenten der Auswertungseinheit 24 und die für RFID-Kommunikation erforderlichen Schritte nicht näher erläutert.

Ein in der Antenne 16 befindlicher Datenträger 26 enthält die wichtigen Charakteristika der Antenne 16. Der RFID-Leser 10 prüft bei der Initialisierung oder sequentiell, mit welcher Antenne 16 gearbeitet wird, und nimmt die entsprechenden Einstellungen für die Sende-/Empfangseinrichtung 18 automatisch vor. Dazu werden Signale des Datenträgers 26 ausgewertet, die über das Antennenkabel 14 übertragen werden. Der Datenträger 26 ist beispielsweise ein Speicherchip in einer beliebigen bekannten Technologie. Gerade wenn der RFID-Leser 10 mehrere Antennen besitzt, die in ihrem gegenseitigen Erfassungsbereich angeordnet werden, kann der Datenträger 26 auch selbst als RFID-Transponder ausgebildet sein. Es ist auch denkbar, die Antenne 16 geometrisch so aufzubauen, dass der Datenträger 26 in deren Erfassungsbereich liegt. Im eigentlichen Betrieb werden Signale des Datenträgers 26 ausgeblendet, gleich ob dies RFID-Informationen sind oder ob eine andere Speichertechnik verwendet wird, die das Antennenkabel 14 zur Übertragung nutzt.

Der RFID-Leser 10 beziehungsweise dessen Sende-/Empfangseinheit 18 wird somit direkt über den Datenträger 26 der Antenne 16 parametriert, so dass sichergestellt ist, dass RFID-Leser 10 und Antenne 16 in der gewünschten Weise zusammenarbeiten und insbesondere gesetzliche Normen einhalten.

Figur 2 zeigt ergänzend eine dreidimensionale Darstellung einer typischen Anwendung des RFID-Lesers 10 in stationärer Montage an einem Förderband 28. Darauf werden Objekte 30 in einer durch einen Pfeil 32 bezeichneten Richtung durch einen Lesebereich 34 gefördert. An den Objekten 30 sind die RFID-Transponder 36 angeordnet, die von dem RFID-Leser 10 ausgelesen werden, wenn sie sich in dem Lesebereich 34 befinden.

Über dem Lesebereich 34 ist eine nur schematisch dargestellte Abschirmung 38 vorgesehen, welche sowohl den RFID-Leser 10 vor Störsignalen von außen als auch die Umgebung vor der elektromagnetischen Strahlung des RFID-Lesers 10 schützt. Der RFID-Leser 10 an dem so entstehenden Lesetunnel umfasst abweichend von der Darstellung der Figur 1 zwei Antennen 16a-b. Weitere RFID-Leser oder weitere Antennen sind denkbar, einschließlich interner Antennen des RFID-Lesers 10 selbst, um RFID-Signale an weiteren Positionen und aus weiteren Richtungen zu erfassen. Ebenso sind möglicherweise andere Sensoren vorgesehen, um zusätzliche Informationen über die Objekte 30 zu gewinnen, beispielsweise deren Eintritt in den und Austritt aus dem Lesebereich oder das Volumen oder Gewicht der Objekte 30.

## Patentansprüche

1. RFID-Lesevorrichtung (10) zum Auslesen eines RFID-Transponders (36) mit einer Antenne (16) zum Abstrahlen und/oder Empfangen eines RFID-Signals und mit einer Sende-/Empfangseinheit (18), die mit der Antenne (16) verbunden ist, um das RFID-Signal unter Verwendung von Antennenparametern zu senden und/oder zu empfangen,
**dadurch gekennzeichnet,**
**dass** die Antenne (16) einen Datenträger (26) aufweist, in dem die Antennenparameter abgelegt sind, und dass die Sende-/Empfangseinheit (18) dafür ausgebildet ist, auf den Datenträger (26) zuzugreifen, um die Antennenparameter abzufragen.

2. RFID-Lesevorrichtung (10) nach Anspruch 1,
wobei eine mit der Sende-/Empfangseinheit (18) verbundene Auswertungseinheit (24) zum Auslesen und/oder Eincodieren von RFID-Informationen vorgesehen ist.

3. RFID-Lesevorrichtung (10) nach Anspruch 1 oder 2,
wobei die Sende-/Empfangseinheit (18) dafür ausgebildet ist, automatisch beim Verbinden mit der Antenne (16) oder wiederholt während des Betriebs die Antennenparameter abzufragen.

4. RFID-Lesevorrichtung (10) nach einem der vorhergehenden Ansprüche, wobei in dem Datenträger (26) lediglich eine Identifikationsinformation der Antenne (16) abgelegt ist, und wobei die Sende-/Empfangseinheit (18) die Antennenparameter anhand der Identifikationsinformation bestimmt.

5. RFID-Lesevorrichtung (10) nach einem der vorhergehenden Ansprüche, wobei die Antenne (16) eine externe Antenne ist.

6. RFID-Lesevorrichtung (10) nach einem der vorhergehenden Ansprüche, wobei die Antenne (16) über ein Antennenkabel (14) mit der RFID-Lesevorrichtung (10) verbunden ist.

7. RFID-Lesevorrichtung (10) nach Anspruch 6,
wobei das Antennenkabel (14) eines aus einer Vielzahl von zum Anschluss der Antenne (16) verwendbaren Antennenkabeln (14) unterschiedlicher Länge, aber gleichem Dämpfungsverhalten ist.

8. RFID-Lesevorrichtung (10) nach einem der vorhergehenden Ansprüche, wobei der Datenträger (26) ein RFID-Transponder ist.

9. RFID-Lesevorrichtung (10) nach einem der vorhergehenden Ansprüche, wobei die Antennenparameter eine oder mehrere der folgenden sind: Polarisation, Strahlungswiderstand, Impedanz, Wirkungsgrad, Richtfaktor, Antennengewinn, Absorptions- oder Wirkfläche, Bandbreite.

10. Verfahren zum Auslesen eines RFID-Transponders (36) mit einem RFID-Leser (10), dessen Antenne (16) ein RFID-Signal unter Verwendung von Antennenparametern empfängt und/oder abstrahlt,
**dadurch gekennzeichnet,**
**dass** die Antennenparameter auf einen Datenträger (26) der Antenne (16) abgelegt sind und der RFID-Leser (10) auf den Datenträger (26) zugreift, um die Antennenparameter abzufragen.
